Europäisches Patentamt

European Patent Office

Office européen des brevets

(11) Veröffentlichungsnummer: **0 035 655**
**B1**

(12) **EUROPÄISCHE PATENTSCHRIFT**

(45) Veröffentlichungstag der Patentschrift: **07.05.86**

(21) Anmeldenummer: **81100913.3**

(22) Anmeldetag: **10.02.81**

(51) Int. Cl.⁴: **A 45 D 20/30**

(54) Zusammenschaltung der elektrischen und elektronischen Schaltungselemente und Bauteile von Haartrocknern.

(30) Priorität: **11.03.80 DE 3009190**

(43) Veröffentlichungstag der Anmeldung:
**16.09.81 Patentblatt 81/37**

(45) Bekanntmachung des Hinweises auf die Patenterteilung:
**07.05.86 Patentblatt 86/19**

(84) Benannte Vertragsstaaten:
**CH DE FR GB IT LI SE**

(56) Entgegenhaltungen:
**DE-A-2 306 166**
**DE-A-2 751 833**
**DE-A-2 804 820**
**DE-A-2 830 535**
**FR-A-2 408 326**
**GB-A-2 007 877**

(73) Patentinhaber: **Braun Aktiengesellschaft**
**Rüsselsheimer Strasse 22**
**D-6000 Frankfurt/Main (DE)**

(72) Erfinder: **Weise, Hans-Joachim**
**Im Rehwinkel 11**
**D-6472 Altenstadt (DE)**

(74) Vertreter: **Einsele, Rolf**
**Braun Aktiengesellschaft Postfach 1120**
**Frankfurter Strasse 145**
**D-6242 Kronberg Taunus (DE)**

Courier Press, Leamington Spa, England.

**Beschreibung**

Die Erfindung betrifft eine Zusammenschaltung der elektrischen und elektronischen Schaltungselemente und Bauteile von Haartrocknern, die in an sich bekannter Weise unter anderem ein elektromotorisch betriebenes Gebläse und eine elektrische Heizung, sowie Regelglieder enthält, mit denen eine von Hand auf verschiedene Werte einstellbare Luft-Austrittstemperatur unabhängig vom Luftdurchsatz konstant gehalten und beim Auftreten von Störgrößen im Luftaustrittsbereich auf den eingestellten Wert nachgeregelt wird.

Aus der DE—A—27 51 833 ist ein Haartrockner mit einer derartigen Schaltungsanordnung bekannt, die den Gebrauchskomfort und die Betriebssicherheit solcher Handgeräte wesentlich verbessert. Bei der Herstellung dieses bekannten Haartrockners ist es erforderlich, eine relativ große Anzahl einzelner elektrischer und elektronischer Bauteile in das Gerät einzubauen, wobei deren Unterbringung im Gerätegehäuse unter Umständen zu Zugeständissen in der Produktgestaltung zwingt und die Montage der zahlreichen Einzelteile arbeitsintensiv und nur in mehreren Arbeitsgängen zu bewerkstelligen ist. Darüber hinaus muß jede einzelne Baugruppe vor dem Einbau gesondert geprüft werden, was eine Vielzahl von Prüfvorrichtungen erfordert.

Der vorliegenden Erfindung liegt die Aufgabe zugrunde, die Zusammenschaltung der elektrischen und elektronischen Baulemente für ein Haarpflegegerät so zu gestalten, daß alle Teile leicht mon tiebar, leicht prüfbar und leicht einbaubar sind. Ferner sollen die Voraussetzungen dafür geschaffen werden, daß die Herstellung von Geräte-Baureihen, d.h., von Abwandlungen eines Haartrockner-Grundtyps in mehreren Varianten- z.B. bezüglich Heiz- und Gebläse-Leistung und/oder -Abstufungen bzw. -Regelung — rationell durchgeführt werden kann.

Gemaß der vorliegenden Erfindung wird die gestellte Aufgabe dadurch gelöst, daß die elektrischen und elekronischen Schaltungs-elemente und Bauteile derart aufgeteilt und in zwei bei der Montage getrennt handhabbaren und über korrespondierende Anschlußleisten miteinander verbindbaren Baugruppen zusammengeschaltet sind, wobei die erste dieser beiden Baugruppen ausführungs-spezifische Teile einer Gerätebaureihe — wie Elektromotor, Heizung, Thermoschalter, Temperaturfühler, Trimmer und Sollwertsteller — umfaßt, während die zweite Baugruppe als Modul ausgebildet ist und solche Teile enthält, die den verschiedenen Ausführungen der betreffenden Gerätebaureihe gemeinsam sind — wie den Nullspannungs-Schalter und die zur Gleichspannungsversorgung des Elektromotors bzw. die zu dessen Umschaltung auf Halbwellenbetrieb dienenden Dioden.

Durch diese erfindungsgemäße Zusammenschaltung der elektrischen und elektronischen Schaltungselemente und Bauteile wird es möglich, jedem Verbraucher eine weitestgehend seinen ganz persönlichen Gewohnheiten und Bedüfnissen angenäherte Variante eines in großen Stückzahlen und daher kostengünstig produzierten Haartrockner-Grundtyps zur Verfügung zu stellen, Weiterhin sind produktionstechnisch insbesondere die gesteigert Flexibilität bei der Anpassung an Marktbedürfnisse sowie die gleichzeitig erzielte Vereinfachung der Lagerhaltung hervorzuheben.

Die Erfindung läßt die verschiedensten Ausführungsmöglichkeiten zu. Eine davon ist in der anhängenden Zeichnung näher dargestellt und zwar zeigen:

Fig. 1 die Schaltungsanordnung für einen Handhaartrockner, bei dem die eingestellte Lufttemperatur unabhängig vom Luftdurchsatz konstant gehalten wird,

Fig. 2 bis 4 Schaltungsbeispiele für die Stromversorgung des Motors und der Heizung des Handhaartrockners und

Fig. 5 das Blockschaltbild eines Einheitsmoduls, das neben den elektrischen Bauteilen für die Regeleinrichtung zusätzlich die elekrischen Bauteile für die Motorversorgung aufweist so, daß dieses Einheitsmodul in einer Vielzahl von Handhaartrocknern unterschiedlicher Leistungsklasse und Größe einsetzbar ist.

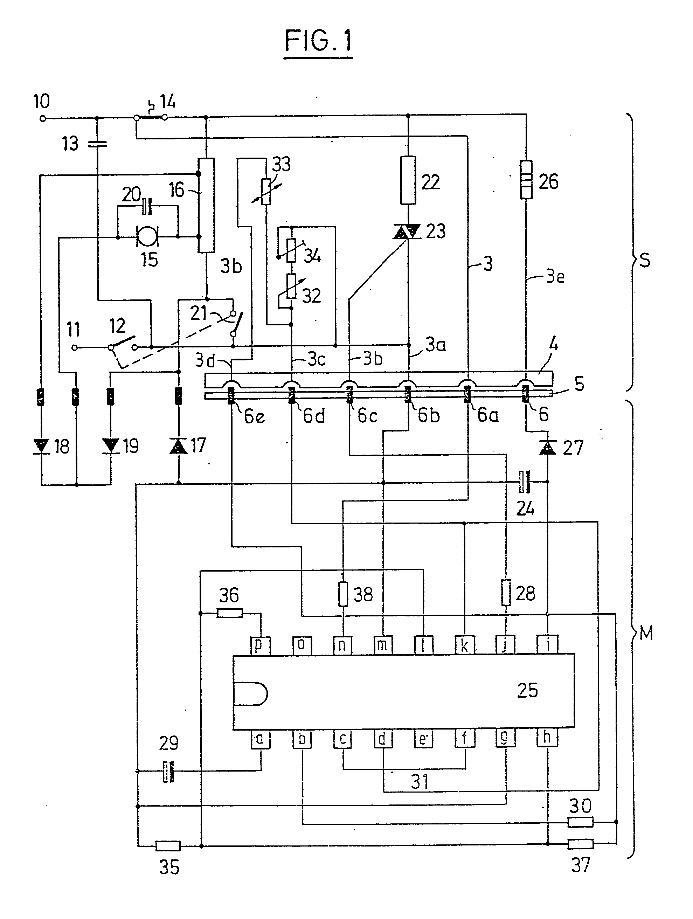

Bei der elektrischen Schaltungsanordnung gemäß Fig. 1, mit deren Hilfe der Haartrockner betrieben wird, sind mit 10 und 11 die beiden Eingangsklemmen bezeichnet, an denen z.B. eine Wechselspannung $U = 220V$ liegt. Hinter der Eingangsklemme 11 befindet sich ein Netzschalter 12, mit dem das Gerät ein- und ausgeschaltet werden kann. Parallel zu den Eingangsklemmen 10 und 11 und hinter dem Netzschalter 12 ist ein Kondensator 13 vorgesehen, der zur Funkenstörung dient. Im oberen Stromzweig ist ein Thermoschalter 14 eingefügt, der bei Überhitzung das ganze Gerät außer Betrieb setzt. Dieser Schalter 14 ist innerhalb des Haartrockners z.B. in der Heizung 1b und 22a angeordnet.

Die Stromversorgung des Gleichstrom-Motors 15 erfolgt über einen Heizwiderstand 16, der mit seinem oberen Ende und die Klemme 10 und mit seinem unteren Ende über die Diode 17 an die Klemme 11 gelegt werden kann. Von dem Heizwiderstand 16 führen drei Leitungen weg, die an verschiedenen Stellen des Heizwiderstandes angelötet sind. Zwei Leitungen führen über jeweils eine Diode 18, 19 an den einen Anschluß des Gleichstrom-Motors 15, während die dritte Leitung direkt auf den anderen Anschluß dieses Motors 15 führt. Biede Anschlüsse des Gleichstrom-Motors 15 sind über einen Entstör-Kondensator 20 miteinander verbunden. Die beriets erwähnte Diode 17 kann mittels eines parallel geschalteten Schalters 21 kurzgeschlossen werden. Damit kann vom Halbwellen-Betrieb auf Vollwellen-Betrieb und umgekehrt geschaltet werden.

Der eigentliche Heizwiderstand 22, d.h. der Widerstand der ausschließlich zu Heizzwecken dient, ist in Reihe zu einem Triac 23 geschaltet. Die aus Widerstand 22 und Triac 23 bestehende Reihenschaltung ist ihrerseits parallel zu den Eingangsklemmen 10, 11 gelegt. Von dem unteren Anschluß des Triacs 23 führt eine Verbindung auf einen Siebkondensator 24 und einen Anschluß m eines integrierten Nullspannungs schalters 25. Der Siebkondensator 24 ist mit seinem dem Triac 23 abgewandten Anschluß über eine Diode 27 und einen Vorwiderstand 26 verbunden, der an der Klemme 10 liegt. Diese Diode dient zur Leistungshalbierung für die IC-Versorgung, d.h. sie ist ein Einweg-Gleichrichter. An der Verbindungsleitung zwischen Kondensator 24 und Vorwiderstand 26 liegt der Anschluß i des intergrierten Nullspannungsschalters 25.

Der integrierte Nullspannungsschalter 25 hat insgesamt sechzehn Anschlüsse a—p, von denen der Anschluß j über einen Strombegrenzungs-Widerstand 28 mit der Steurelektrode des Triacs 23 verbunden ist. Der Anschluß a ist über einen Kondensator 29 mit der Klemme 11 verbindbar. Zusammen mit dem Widerstand 30, der zwischen Anschluß b und Anschluß i liegt, bildet dieser Kondensator 29 ein RC-Glied des Sägezahn-Generators. Während die Anschlüsse c und f im vorliegenden Fall lediglich über einen Bügel 31 miteinander verbunden sind, ist der Anschluß d sowohl mit dem Anschluß k als auch mit der Verbindungsleitung zwischen einem Stellwiderstand 32 und einem Temperaturfühler-Widerstand 33 verbunden. Von dem anderen Ende des Stellwiderstandes 32 führt eine Verbindung zu einem Trimmer-Widerstand 34, der seinerseits an dem Kondensator 29 und einem Widerstand 35 liegt.

Dieser letztgenannte Widerstand 35 ist noch mit einem Widerstand 36, einem Widerstand 37 und dem Anschluß h des integrierten Nullspannungs-Schalters 25 verbunden. Während der Widerstand 35 zwischen den Anschlüssen h und g liegt, ist der Widerstand 36 zwischen den Anschlüssen p und h angeordnet. Schließlich ist auch noch ein Widerstand 38 vorgesehen, der zwischem dem Anschluß n und der Klemme 10 liegt. Dieser Widerstand 38 dient zur Festlegung der Pulsbreite des Synchronisierungsstroms, sowie der Synchronisation zum Netz.

Die prinzipielle Wirkungsweise der in der Fig. 1 gezeigten Schaltungsanordung ist folgende:

Zunächst wird der Schalter 12 geschlossen, d.h. es wird in Fig. 1 der Schalter 6 von der Stellung "Aus" in die Stellung "Eins" gebracht. Wird der Schalter in die Stellung "Eins" gebracht, so läuft der Motor 15 nur mit halber Kraft, weil die Diode 17 wirksam ist. Wird der Schalter jedoch in die Stellung "Zwei" gebracht, wo wird die Diode 17 mit Hilfe des Schalters 21 kurzgeschlossen, d.h. der Motor 15 läuft mit voller Kraft.

Mit dem Einschalten des Schalters 12 wir die Netzspannung auch der Serienschaltung, bestehend aus Widerstand 22 und Triac 23, zugeführt. Die von dem Widerstand 22 abgegebene Leistung hängt davon ab, wie oft das Triac 23 von dem Anschluß j des Nullspannungs-Schalters 25 geöffnet oder geschlossen wird, d.h. in welchen Zeitabständen die Öffnung oder Schließung erfolgt.

Die Regelung der Temperatur der Luft erfolgt somit im wesentlichen über die Ansteuerung des Triacs 23. Der Heizwiderstand 16 erzeugt dagegen eine Grundleistung, die nur in zwei Stufen variierbar ist. DieseGrundleistung ist in der Regel kleiner als die vom Widerstand 22 abgegebene Heizleistung.

In welchem Maße der Triac 23 auf- und zugesteuert wird, bestimmt sich im wesentlichen durch die Einstellung des Stellwiderstand 32 und die vom Temperaturfühler-Widerstand 33 gemessene Temperatur. Da sich der Fühler-Widerstand 33 im Gebläse-Luftstrom des Haartrockners 1 befindet, wird die Temperatur dieses Luftstroms geregelt.

Mit dem Stellwiderstand 32 wird also ein bestimmter Soll-Wert eingestellt, der im Nullspannungs-Schalter 25 mit dem Ist-Wert des Temperaturfühler-Widerstands 33 verglichen wird. Entsprechend der Abweichung zwischen Soll- und Ist-Wert wird dann der Triac 23 über den Anschluß j angesteuert.

Ein Schutz vor Verbrennungen der Kopfhaut etc. wird dadurch erreicht, daß bei normalem Luftdurchsatz in den Stellungen "Eins" oder "Zwei" des Schalters das Verhältnis der Widerstände 32 und 33, vereinfacht ausgedrückt, innerhalb eines vorgegebenen Rahmens schwanken kann. Wird dieses Verhältnis wesentlich gestört, so bemerkt dies der Nullspannungs-Schalter 25 und regelt die Temperatur entsprechend nach unten. Stellt man beispielsweise mit Hilfe des Stellers 7 eine Soll-Temperatur von 80°C ein und herrscht zu diesem Zeitpunkt am Ort des Widerstandes 33, also in der Nähe der Luftaustrittsöffnung eine Raumtemperatur von 20°C, so wird zunächst der Heizwiderstand 22 so lange mit Strom beaufschlagt, bis der Temperaturfühler-Widerstand 33 einen Widerstandswert angenommen hat, welcher der Temperatur von 80°C zugeordnet ist. Dieser Widerstandswert ist somit dem Widerstandswert des Widerstandes 32 fest zugeordnet. Hält nun jemand beispielsweise mit der Hand die Luftaustrittsöffnung, oder die Einlaßöffnung des Haartrockners zu, so kann keine oder nur noch wenig Luft austreten. Hierdurch wird die verbleibende Luft sehr stark erwärmt, d.h. der Temperaturfühler-Widerstand 33 registriert eine Temperatur, die nicht mit dem Soll-Wert übereinstimmt. Auf Grund dieser erhöhten Temperatur verändert sich sein Widerstandswert und entspricht nun nicht mehr der zuvor erwähnten festen Zuordnung. Der integrierte Nullspannungs-Schalter 25 bemerkt die gestörte Zuordnung und regelt die Luftaustrittstemperatur entsprechend nach unten und zwar so lange, bis die alte Zuordnung wieder hergestellt ist.

Andererseits kann die elektrische Zuleitung vor dem Fühler-Widerstand 33 unterbrochen sein, sodaß ein "Auswandern" der Spannung am Widerstand in die andere Richtung erfolgt. Auch dieser Fehler wird vom Nullspannungs-Schalter 25 entdeckt und mit einem Abschalten der heizleistung 22 beantwortet. Der Nullspannungs-Schalter enthält also, anders ausgedrückt, zwei Spannungsschwellwerte, deren Überschreitung durch die Spannung des Fühler-Widerstandes 33 eine Herunterregelung der Temperatur bewirkt.

Nullspannungs-Schalter, welche die vorstehend beschriebenen Funktionen ausführen können, sind bekannt. Wie Fig. 1 zeigt sind die notwendigen elektrischen Bauteile in zwei Gruppen S und M aufgeteilt dargestellt. Die Bauteile, die der Stromversorgung für den Schaltkreis und der Synchronisation dienen 24, 25, 27-30, 35-38, sind sämtlich auf einer als Modul S bezeichneten Steckkarte angeordnet, die über die Anschlußleiste 5 mit den gerätespezifischen Bauteilen 12, 13, 15, 16, 20, 21, 23, 26, 32, 33, 34 verbindbar sind.

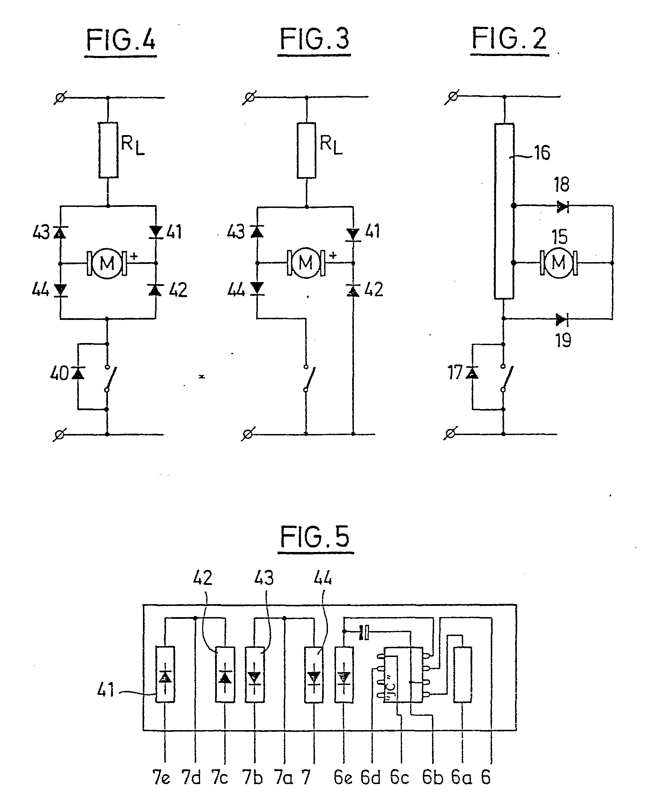

Die zur Stromversorgung des Motors 15 notwendigen Bauteile, die Dioden 18, 19 können selbstverständlich auch auf dem Modul M angeordnet und über die Anschlußleiste 5 mit dem anderen Teil der Schaltung verbunden sein. In diesem Falle ist das Einheitsmodul gemäß Fig. 5 zweckmäßig. Es weist die Anschlußfahnen 6 bis 6e auf, die der Stromversorgung des Schaltkreises (Regelkreises) dienen und über die die Synchronisierung zum Netz bewirkt wird und die Anschlußfahnen 7 bis 7e über die die Stromversorgung des Antriebsmotors bewirkt wird.

Die in den Fig. 2 bis 4 dargestellten Stromlaufpläne zeigen verschiedene Varianten für das Motorversorgungsteil der Schaltung. In Fig. 2 ist die Belegung der Anschlußfahnen 7, 7b dargestellt, d.h. die Stromversorgung des Motors 15, bei Benutzung der Spannungsabgriffe am Heizaggregat 16, erfolgt in der Weise, wie die Fig. 1 zeigt.

Die Figuren 3 und 4 zeigen Stromversorgungen für den Motor 15, bei denen jeweils zusätzliche Dioden erforderlich sind was bedeutet, daß die Anschlußfahnen 7c bis 7e belegt werden müssen. In diesen beiden Schaltungsbeispielen fehlt ein Spannungsabgriff am Heizaggregat 16. Die Diode 40 gemäß Fig. 4 ermöglicht einen Halbwellen-Betrieb.

**Patentanspruch**

Zusammenschaltung der elektrischen und elektronischen Schaltungselemente und Bauteile von Haartrocknern, die in an sich bekannter Weise unter anderem ein elektromotorisch betriebenes Gebläse und eine elektrische Heizung, sowie Regelglieder enthält, mit denen eine von Hand auf verschiedene Werte einstellbare Luft-Austrittstemperatur unabhängig vom Luftdurchsatz konstant gehalten und beim Auftreten von Störgrößen im Luftaustrittsbereich auf den eingestellten Wert nachgeregelt wird, dadurch gekennzeichnet, daß die elektrischen und elektronischen Schaltungselement und Bauteile derart aufgeteilt und in zwei bei der Montage getrennt handhabbarren und über korrespondierende Anschlußleisten (4, 5) miteinander verbindbaren Baugruppen (S und M) zusammengeschaltet sind, daß die eine Baugruppe (S) ausführungs-spezifische Teile einer Gerätabaureihe, wie Elektromotor (15), Heizung (16, 22), Thermoschalter (14), Temperaturfühler (33), Trimmer (34) und Sollwertsteller (32), umfaßt, während die andere Baugruppe (M) als Modul ausgebildet ist und solche Teile enthält, die den verschiedenen Ausführungen der betreffenden Gerätebaureihe gemeinsam sind, wie Nullspan-nungs-Schalter (25) und die zur Gleichspannungsversorgung des Elektromotors (15) bzw. zu dessen Umschaltung auf Halbwellenbetrieb dienenden Dioden (18, 19; 41, 42, 43, 44; 17).

**Claims**

Interconnection of electrical and electronic circuit elements and components of hair dryers having in known manner inter alia an electromotively driven blower and an electric heating system, together with controls, so that the air exit temperature adjustable by hand to different values can be kept constant independently of the air flow rate and is readjusted to the set value when disturbance variables occur in the air discharge zone, characterised in that the electrical and electronic circuit elements and components are subdivided in such a way and are interconnected in two subassemblies (S and M), which can be joined together, which can be separately manipulated in assembly and are interconnected by means of corresponding terminal strips (4,5), that one subassembly (S) has design-specific parts of an equipment series, such as an electric heat motor (15), heating system (16, 22), thermal switch (14), heat sensor (33), trimmer (34) and set point adjuster (32), whilst the other subassembly (M) is constructed as a module and contains those parts which are common to the different designs of the particular equipment series, such as no-voltage switch (25) and the diodes (18, 19; 41, 42, 43, 44; 17) used for the d.c. voltage supply of the electric motor (5) or for the switching over of the same to half-wave operation.

**Revendication**

Interconnexion des éléments de circuit et composants, électriques et électroniques, de séche-cheveux comportant entre autres, de manière connue en soi, un ventilateur entraîné par moteur électrique et un chauffage électrique, ainsi que des organes de régulation avec lesquels une température de sortie d'air manuellement réglable à différentes valeurs est maintenue constante indépendamment du débit d'air et est régulée à la valeur réglée en cas d'occurence de grandeurs perturbatrices dans la région de la sortie d'air caractérisée en ce que les composants et éléments de circuit, électriques et électroniques, sont répartis et interconnectés en deux groupes (S et M) qui peuvent être manipulés séparément lors du montage et qui peuvent être reliés l'un à l'autre par des barrettes de connexion (4, 5) correspondantes, de façon que le premier groupe (S) comporte des pièces spécifiques à l'exécution d'une série d'appareils, telles que moteur électrique (15), chauffage (16, 22), thermo-interrupteur (14), capteur de température (33), organes ajustables (34) et organes (32) de réglage de valeur de consigne, tandis que l'autre groupe (M) est réalisé en tant que module et comporte les pièces qui sont communes aux diverses exécutions des séries d'appareils concernées, par exemple un interrupteur à tension nulle (25) et les diodes (18, 19; 41, 42, 43, 44; 17) servant à l'alimentation sous tension continue du moteur électrique (15), ou encore à la commutation de celui-ci sur une marche avec alimentation du type "une seule alternance".

## FIG.1

# FIG.4

$R_L$

43 · 41
(M) +
44 · 42

40

# FIG.3

$R_L$

43 · 41
(M) +
44 · 42

# FIG.2

16

18

15
(M)

19

17

# FIG.5

42  43  44

41

7e 7d 7c 7b 7a 7  6e 6d 6c 6b 6a 6

2